(19) Europäisches Patentamt
European Patent Office
Office européen des brevets

(11) **EP 3 653 562 B1**

(12) **EUROPÄISCHE PATENTSCHRIFT**

(45) Veröffentlichungstag und Bekanntmachung des Hinweises auf die Patenterteilung:
**15.04.2026 Patentblatt 2026/16**

(21) Anmeldenummer: **18207067.2**

(22) Anmeldetag: **19.11.2018**

(51) Internationale Patentklassifikation (IPC):
**B66C 13/06** $^{(2006.01)}$

(52) Gemeinsame Patentklassifikation (CPC):
**B66C 13/063; Y02E 10/72**

(54) **VERFAHREN UND SCHWINGUNGSREGLER ZUM AUSREGELN VON SCHWINGUNGEN EINES SCHWINGFÄHIGEN TECHNISCHEN SYSTEMS**

METHOD AND OSCILLATING REGULATOR FOR REGULATING OSCILLATIONS OF AN OSCILLATORY TECHNICAL SYSTEM

PROCÉDÉ ET RÉGULATEUR D'OSCILLATION PERMETTANT DE RÉGULER LES OSCILLATIONS D'UN SYSTÈME TECHNIQUE OSCILLANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.05.2020 Patentblatt 2020/21**

(73) Patentinhaber: **ABB Schweiz AG**
**5400 Baden (CH)**

(72) Erfinder:
• **Stöger, Andreas**
**3920 Groß Gerungs (AT)**
• **Frauscher, Thomas J.**
**5142 Eggelsberg (AT)**
• **Skotschek, Ralf**
**4400 Steyr (AT)**

(74) Vertreter: **Patentanwälte Pinter & Weiss OG**
**Prinz-Eugen-Straße 70**
**1040 Wien (AT)**

(56) Entgegenhaltungen:
EP-A1- 2 952 466    EP-A1- 3 305 710
EP-B1- 0 578 280    DE-A1- 10 064 182

**Beschreibung**

Die gegenständliche Erfindung betrifft ein Verfahren zum Ausregeln von Schwingungen zumindest einer zu regelnden Schwingungsgröße eines schwingfähigen technischen Systems mit einem Schwingungsregler mit einem Regelgesetz, das aus einem Sollwert und einem Istwert und/oder einer zeitlichen Ableitung eines Sollwerts und eines Istwerts der zu regelnden Schwingungsgröße eine Stellgröße für einen Aktuator des schwingfähigen technischen Systems berechnet. Die Erfindung betrifft ebenso einen entsprechenden Schwingungsregler.

Hebeeinrichtungen, insbesondere Kräne, gibt es in vielen verschiedenen Ausführungsformen und sie kommen in vielen unterschiedlichen Anwendungsgebieten zum Einsatz. Zum Beispiel gibt es Turmkräne, die vorwiegend für den Hoch- und Tiefbau verwendet werden, oder es gibt Mobilkräne, z.B. für die Montage von Windkraftanlagen. Ebenso sind Hebeeinrichtungen in Hochregallagern (sogenannte Stacker Cranes) bekannt. Brückenkräne werden z.B. als Hallenkräne in Fabrikhallen verwendet und Portalkräne z.B. für die Manipulation von Transportbehältern (z.B. Container) an Umschlagsorten für den intermodalen Güterumschlag, wie z.B. in Häfen zum Umschlag von Schiffen auf die Eisenbahn oder den LKW oder auf Güterbahnhöfen zum Umschlag von der Eisenbahn auf den LKW oder umgekehrt. Vorwiegend werden dabei die Güter für den Transport in standardisierten Containern gelagert, sogenannten ISO-Containern, welche gleichermaßen für den Transport in den drei Transport-Modi Straße, Schiene, Wasser geeignet sind. Der Aufbau und die Funktionsweise eines Portalkrans ist hinlänglich bekannt und ist z.B. in der US 2007/0289931 A1 anhand eines "ship-to-shore-Krans" beschrieben. Der Kran weist eine tragende Struktur bzw. ein Portal auf, auf dem ein Ausleger angeordnet ist. Dabei ist das Portal mit Rädern z.B. auf einem Gleis beweglich angeordnet und kann in einer Richtung bewegt werden. Der Ausleger ist fest mit dem Portal verbunden und am Ausleger wiederum ist eine entlang des Auslegers bewegliche Laufkatze (allgemein Tragelement) angeordnet. Zur Aufnahme einer Last, z.B. eines ISO-Containers, ist die Laufkatze mittels Seilen mit einem Lastaufnahmeelement, beispielsweise einem sogenannten Spreader, verbunden. Zur Aufnahme und Manipulation einer Last kann das Lastaufnahmeelement mittels Seilwinden gehoben oder gesenkt werden, hier mittels zweier Seilwinden für jeweils zwei Seile. Das Lastaufnahmeelement kann auch an unterschiedlich große Lasten angepasst werden.

Um die Wirtschaftlichkeit von Logistik-Prozessen zu erhöhen, wird unter anderem ein sehr rascher Güterumschlag gefordert, d.h. z.B. sehr rasche Be- und Entladungsvorgänge von Frachtschiffen und entsprechend schnelle Bewegungsvorgänge der Lastaufnahmeelemente und der Portalkräne insgesamt. Gleiches gilt natürlich auch für andere Hebe- oder Fördereinrichtungen analog. Solche schnellen Bewegungsvorgänge der Last können aber dazu führen, dass sich unerwünschte Schwingungen des Lastaufnahmeelements aufbauen, welche wiederum den Manipulationsvorgang verzögern, da die Last nicht präzise am vorgesehenen Ort platziert werden kann. Dabei können Drehschwingungen des Lastaufnahmeelements, also Schwingungen um eine Hochachse (skew), Längsachse (list) und/oder Querachse (trim) der Last auftreten, wobei bei Hebeeinrichtungen typischerweise Drehschwingungen um die Hochachse auftreten oder relevant sind. Ebenso kann das am Seil hängende Lastaufnahmeelement durch Bewegungsvorgänge auch in einer Bewegungsrichtung eines Teiles der Hebeeinrichtung, beispielsweise der Laufkatze und/oder des Portals, auslenken, was ebenso zu Pendelschwingungen des Lastaufnahmeelements führen kann (sogenannter sway).

Aufgrund des konstruktiven Aufbaus der Hebeeinrichtung handelt es sich bezogen auf das Lastaufnahmeelement um ein schwach oder ungedämpftes schwingungsfähiges mechanisches System. Das bedeutet, dass der schwingfähige Teil des mechanischen Systems keine oder nur eine schwache eigene Dämpfung aufweist, wodurch auftretende Schwingungen nicht oder nur sehr schwach gedämpft werden. Die Bewegung des schwingfähigen Teils des mechanischen Systems kann dabei durch eine Differentialgleichung 2.Ordnung (in der Systemtheorie oftmals auch als PT2-Glied bezeichnet) oder höherer Ordnung beschrieben werden. Es gibt natürlich neben Hebeeinrichtungen noch andere schwingungsfähige mechanische Systeme mit oder ohne Dämpfung, beispielsweise ein mechanisches System mit einer auf einem angetriebenen, bewegten Teil pendelnd aufgehängten Last als schwingfähiger Teil. Die Bewegung der Last kann dabei mit einer Differentialgleichung 2.Ordnung beschrieben werden. Der bewegte Teil kann beispielsweise ein Fahrzeug einer Fördereinrichtung sein, z.B. ein Fahrzeug eines Langstatorlinearmotors zur Förderung von Lasten, wie z.B. in der EP 3 109 998 A1 oder der EP 3 243 772 A1 beschrieben. Das Pendel kann dabei auch als starrer, fix am Fahrzeug eingespannter, biegsamer Arm ausgeführt sein. Die Bewegung des biegsamen Armes kann wiederum mit einer Differentialgleichung 2.Ordnung beschrieben werden. Auch ein bewegtes Fahrzeug mit einem Behälter, in dem sich eine Flüssigkeit befindet, die durch die Bewegung schwappt ist ein Beispiel hierfür. Dabei kann die Bewegung der Flüssigkeit in guter Näherung durch eine Differentialgleichung 2.Ordnung beschrieben werden. Auch in diesem Fall kann es sich um ein Fahrzeug einer Fördereinrichtung, z.B. ein Langstatorlinearmotor, handeln. Auch eine Kombination davon ist denkbar, also z.B. ein pendelnd auf einem bewegten Fahrzeug aufgehängter Behälter mit einer schwappenden Flüssigkeit. Es ist offensichtlich, dass es eine Fülle solcher schwingungsfähigen mechanischen Systeme gibt, wobei die Bewegung eines schwingfähigen Teils des mechanischen Systems mit einer Differentialgleichung zumindest 2.Ordnung beschrieben werden kann.

Neben mechanischen schwingfähigen Systemen gibt es natürlich auch noch andere schwingfähige technische Systeme, beispielsweise elektrische schwingfähige Systeme (elektrische Schwingkreise) oder hydraulische oder pneumatische schwingfähige Systeme. Auch solche Schwingungen können in analoger Weise durch eine Differentialgleichung 2.Ordnung oder höherer Ordnung beschrieben werden.

Allgemein bezieht sich die Erfindung auf schwingfähige technische Systeme die durch physikalische Größen, wie ein Bewegungsfreiheitsgrad, eine elektrische Spannung, ein elektrischer Strom, ein Druck, ein Volumen- oder Massenstrom, etc., beschrieben werden können, wobei zumindest eine physikalische Größe (als Schwingungsgröße bezeichnet) zu periodischen Schwingungen angeregt werden kann. Auf das schwingfähige technische System kann mittels zumindest einem Aktuator, beispielsweise ein Antrieb eines bewegten Teiles eines mechanischen Systems (z.B. Hebeeinrichtung oder Langstatorlinearmotor), eine Hydraulikpumpe, eine elektrische Spannungs- oder Stromquelle, etc., von außen Einfluss genommen werden, um die Schwingungsgröße zu beeinflussen. Die Schwingung der zumindest einen Schwingungsgröße kann mathematisch / physikalisch durch eine Differentialgleichung 2. oder höherer Ordnung beschrieben werden. Solche Schwingungen sind im normalen Betrieb üblicherweise unerwünscht und sollen daher ausgeregelt werden.

Um die Schwingung der Schwingungsgröße im Betrieb des schwingfähigen technischen Systems auszuregeln ist oftmals ein Schwingungsregler implementiert, der eine Stellgröße für einen Aktuator des technischen Systems berechnet, um die Schwingungsgröße zur Dämpfung der Schwingung zu beeinflussen. Der Aktuator kann je nach Ausführung des schwingfähigen technischen Systems vielfältig sein. Beispielsweise kann bei einer Hebeeinrichtung als Stellgröße die Geschwindigkeit einer Laufkatze (als Aktuator) berechnet werden, um Pendelschwingungen in Bewegungsrichtung der Laufkatze auszuregeln. Ebenfalls kann bei einer Hebeeinrichtung die Seillänge eines Seils des Lastaufnahmeelements als Stellgröße berechnet werden und mittels einer Seillängenverstelleinheit (als Aktuator) eingestellt werden, um Drehschwingungen auszuregeln. Bei einem Fahrzeug eines Langstatorlinearmotors (als Aktuator) kann als Stellgröße die einzustellende Geschwindigkeit des Fahrzeugs berechnet werden, um eine Pendelschwingung einer pendelnd aufgehängten Last oder um die Schwappbewegung einer Flüssigkeit in einem Behälter am Fahrzeug auszuregeln. Bei einem hydraulischen System kann mit einer Hydraulikpumpe der Druck und/oder der Durchfluss (als Stellgröße) einer Hydraulikflüssigkeit beeinflusst werden. Bei einem elektrischen System kann eine eingeprägte elektrische Spannung und/oder ein eingeprägter Strom als Stellgröße verwendet werden. Je nach Ausführung des schwingfähigen technischen Systems sind natürlich noch andere Aktuatoren und Stellgrößen möglich.

Zusätzlich ist es oftmals erwünscht oder notwendig die Schwingungsgröße des schwingfähigen technischen Systems auf einen bestimmten vorgegebenen Sollwert zu regeln, beispielsweise eine bestimmte zu erreichende Position oder ein Verdrehwinkel eines Lastaufnahmeelement einer Hebeeinrichtung, die Position eines Fahrzeugs eines Langstatorlinearmotors, eine Ausgangsspannung eines elektrischen Schwingkreis, ein Hydraulikdruck eines Hydraulikkreises, etc. Eine derartige Schwingungsgrößenregelung kann mit der Schwingungsregelung kombiniert werden. In diesem Fall werden die Sollwert der Schwingungsgröße eingeregelt und dabei Schwingungen der Schwingungsgröße um die Sollwerte ausgeregelt.

In jedem technischen System sind die Stellgrößen für den Aktuator durch physikalische Vorgaben beschränkt. Beispielsweise ist die maximal erreichbare Geschwindigkeit der Laufkatze einer Hebeeinrichtung oder des Fahrzeugs eines Langstatorlinearmotors durch die Ausführung des Antriebs beschränkt. Gleiches gilt analog auch für den möglichen Verstellbereich einer Seillängenverstelleinheit oder für einen beliebigen anderen mechanischen Aktuator. Mit einer Hydraulikpumpe kann nur ein maximaler Druck und/oder Volumenstrom, oder eine zeitliche Ableitung davon, erzielt werden. Ebenso kann mit einer Spannungs- oder Stromquelle nur eine bestimmte Spannung oder ein bestimmter Strom erzeugt werden. Typische Beispiele für physikalische Beschränkungen eines Elektromotors sind eine maximale Motorspannung eines Elektromotors, was zu einer Geschwindigkeitsbeschränkung führt oder ein maximaler Motorstrom, was zu einer Beschleunigungsbeschränkung führt. Eine mechanische Konstruktion ist beispielsweise durch die mechanische Festigkeit beschränkt, woraus sich eine Kraftbeschränkung ergibt. Genauso gibt es für andere Aktuatorentypen entsprechende physikalische Beschränkungen. Die vom Schwingungsregler, gegebenenfalls in Kombination mit dem Schwingungsgrößenregler, berechnete Stellgrößen werden folglich aufgrund der vorgegebenen Beschränkungen beschränkt und der Aktuator erhält nur die beschränkte Stellgröße. Hierbei sind aber oftmals auch Beschränkungen einer zeitlichen Ableitung der Stellgröße, also wie schnell eine Stellgröße verändert werden kann oder werden darf, zu berücksichtigen. Durch die nach der Berechnung der Stellgröße im Regler erfolgende Stellgrößenbeschränkung wird eine zeitliche Verschiebung der Stellgröße (Phasenverschiebung) und gegebenenfalls auch eine Beschränkung des Wertes der Stellgröße eingebracht. Damit kann, insbesondere bei großen Schwingungsamplituden, der Schwingungsregler die Schwingung der Schwingungsgröße nicht mehr oder nur unzureichend dämpfen. Im Extremfall (bei entsprechend großer Phasenverschiebung) könnte die Schwingung durch den Schwingungsregler mit Stellgrößenbeschränkung sogar verstärkt werden, was auch zu Instabilität führen kann.

In J.B. Klaassens, et al., "Modeling and Control of Container Cranes", London : Cargo Systems, 2000, Proceedings, S.11-12 wird ein Schwingungsregler für einen Containerkran beschrieben, der Pendelschwingungen (sway) und Drehschwingungen (skew) ausregeln soll. Um den Einfluss einer Stellgrößenbeschränkung zu verringern und um die Einhaltung von Beschränkungen der Laufkatzengeschwindigkeit und Laufkatzenbeschleunigung sicherzustellen ist vorgesehen, dass die Reglerverstärkungsparameter adaptiv angepasst werden. Es wird jedoch nicht näher ausgeführt, wie diese adaptive Anpassung erfolgt.

Die EP 0 578 280 B1 offenbart ein Verfahren zum Steuern einer pendelnden Last einer Hebeeinrichtung, gemäß dem Oberbegriff von Anspruch 1 und einem Schwingungsregler gemäß dem Oberbegriff von Anspruch 12. Das Verfahren basiert darauf, dass eine Last innerhalb einer vorgegebenen Zeit zwischen einem Anfangspunkt und einem Endpunkt bewegt wird. Zur Steuerung der Last wird eine Bewegungsgesetz für den Träger verwendet, das so ausgestaltet ist, dass die hängende Last einem Beschleunigungsgesetz unterworfen ist, sodass ein Schwingen der Last gar nicht auftritt.

Es ist eine Aufgabe der Erfindung, die Probleme im Zusammenhang mit einer Stellgrößenbeschränkung bei der Schwingungsregelung eines schwingfähigen technischen Systems auszuräumen, zumindest aber zu verringern.

Diese Aufgabe wird dadurch gelöst, dass im Regelgesetz zur Berechnung der Stellgröße eine Beschränkung zumindest einer zeitlichen Ableitung der Stellgröße berücksichtigt wird. Diese berechnete Stellgröße wird durch den Schwingungsregler an den Aktuator zur Einstellung übergeben. Damit ist es nicht mehr erforderlich, die berechnete Stellgröße nachträglich noch zu beschränken, sondern die berechnete Stellgröße (gegebenenfalls in einer Summe mit anderen Stellgrößen, z.B. aus einer Vorsteuerung) kann direkt im Aktuator verwendet werden, weil darin die Beschränkung bereits berücksichtigt wurde. Bei dieser Vorgehensweise kommt es durch die Beschränkung zu keiner Phasenverschiebung, womit die damit verbundenen negativen Auswirkungen auf die Regelung vermieden werden können.

In einer vorteilhaften Ausgestaltung enthält das Regelgesetz einen Reglerparameter, der abhängig von der Beschränkung der zumindest einen zeitlichen Ableitung der Stellgröße ist. Bevorzugt ist der Reglerparameter eine in das schwingfähige technische System einzubringende Dämpfung, die auf diese Weise an die vorgegebene Beschränkung angepasst werden kann. Dabei ist es besonders vorteilhaft, wenn der Reglerparameter abhängig von einer Schwingungsamplitude der Schwingung und/oder von einer Amplitude einer zeitlichen Ableitung der Schwingung ist, weil damit der Reglerparameter, besonders bevorzugt die Dämpfung, an die aktuelle Schwingung adaptiv angepasst werden kann. Das ermöglicht es beispielsweise bei kleinerer Schwingungsamplitude stärker zu dämpfen, als bei größerer Schwingungsamplitude, womit Schwingungen rascher ausgeregelt werden können.

Die Schwingungsamplitude kann gemessen werden, wird aber bevorzugt mit einem Schwingungsamplitudenbeobachter berechnet, der aus zeitlichen Ableitungen der Istwerte und der Sollwerte der zu regelnden Schwingungsgröße die Schwingungsamplitude der Schwingung und/oder die Amplitude einer zeitlichen Ableitung der Schwingung berechnet. Auf diese Weise kann auf zusätzliche Messeinrichtungen zur Messung der Amplitude verzichtet werden, da die Schwingungsamplitude und die Amplituden der Ableitungen aus vorhandenen Messgrößen geschätzt werden kann.

Bevorzugt wird bei der Berechnung der Stellgröße eine Totzeit des schwingfähigen technischen Systems berücksichtigt, vorzugsweise indem ein um die Totzeit in der Zukunft liegender Regelfehler berechnet wird und dieser zukünftige Regelfehler bei der Berechnung der Stellgröße berücksichtigt wird. Bei vielen technischen Systemen kann die Totzeit beträchtlich sein. Durch Berücksichtigung der Totzeit kann die Regelgüte der Schwingungsregelung deutlich verbessert werden.

Vorzugsweise wird eine Vorsteuerung implementiert, die aus Sollwerten der Schwingungsgröße eine Vorsteuer-Stellgöße berechnet, die zur Ermittlung der Stellgröße für den Aktuator mit der vom Schwingungsregler berechneten Stellgröße addiert wird. Durch die Vorsteuerung muss der Schwingungsregler nur mehr kleinere Regelfehler ausregeln, wodurch sich die Dynamik der Regelung verbessern lässt.

Besonders vorteilhaft wird ein Schwingungsgrößenregler implementiert, der die Abweichung zwischen einem Sollwert der zu regelnden Schwingungsgröße und einem Endwert der Schwingungsgröße, als der nach dem Ausregeln der Schwingung erreichte Wert der Schwingungsgröße, ausregelt. Damit wird eine vorteilhafte Entkopplung des Schwingungsreglers vom Schwingungsgrößenregler erreicht, womit das Regelverhalten des Schwingungsreglers durch die Schwingungsgrößenregelung nicht beeinflusst wird. Hierfür kann der Endwert einfach in einem Endwertbeobachter berechnet werden, der einen Gleichanteil der Schwingung der zu regelnden Schwingungsgröße als Endwert berechnet.

Die gegenständliche Erfindung wird nachfolgend unter Bezugnahme auf die Figuren 1 bis 6 näher erläutert, die beispielhaft, schematisch und nicht einschränkend vorteilhafte Ausgestaltungen der Erfindung zeigen. Dabei zeigt

Fig.1 eine Hebeeinrichtung als Beispiel eines schwingfähigen technischen Systems,
Fig.2 Schwingungsfreiheitsgrade eines Lastaufnahmeelements der Hebeeinrichtung,
Fig.3 einen Betriebsregler des technischen Systems mit einer Schwingungsregelung einer Schwingungsgröße,
Fig.4 einen Betriebsregler einer Hebeeinrichtung mit Schwingungsregelung, Vorsteuerung, Schwingungsgrößenregelung und Seillängenregler,
Fig.5 einen Schwingungsregler mit einem Schwingungsamplitudenbeobachter und
Fig.6 einen Schwingungsgrößenregler mit Endwertbeobachter.

Wie bereits eingangs erwähnt kann die erfindungsgemäße Schwingungsregelung grundsätzlich auf jedes schwingfähige technische System angewendet werden, bei denen eine Schwingung einer Schwingungsgröße des technischen Systems durch eine Differentialgleichung zumindest 2.Ordnung beschrieben werden kann. Eine Schwingungsgröße ist eine zeitlich variable physikalische Größe, z.B. Geschwindigkeit, Beschleunigung, elektrischer Strom, elektrische Spannung, Druck, Durchfluss, usw., mit der das zeitvariante Verhalten des schwingfähigen technischen Systems beschrieben werden kann. Beispielhaft und nicht einschränkend wird die Erfindung nachfolgend am Beispiel einer Hebeeinrichtung als schwingfähiges technisches System 1 beschrieben, wobei die folgenden Ausführungen analog auf jedes andere schwingfähige technische System mit einer Schwingungsgröße übertragen werden können.

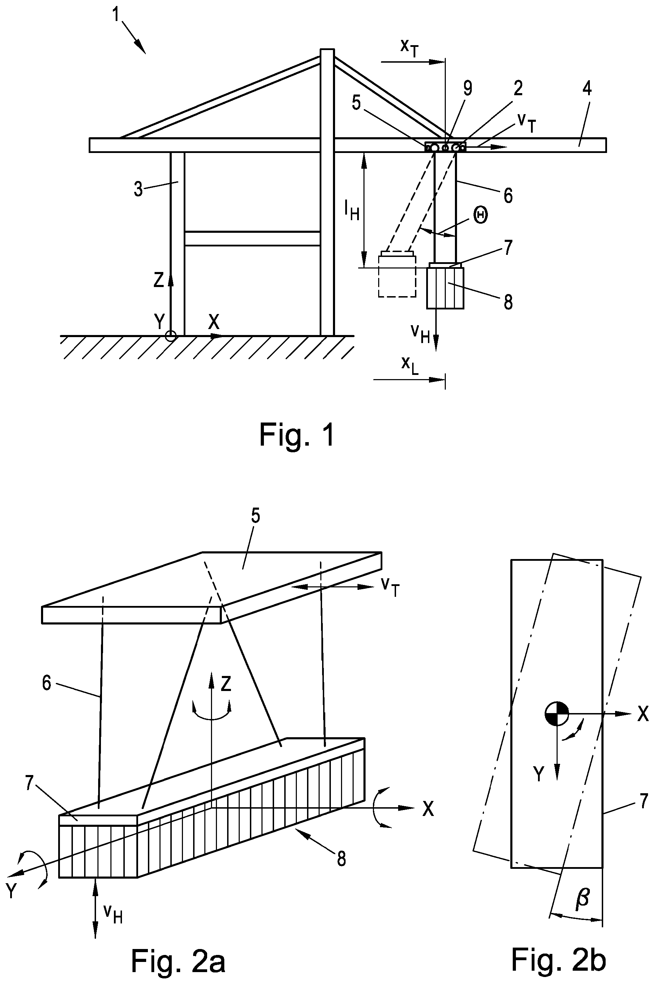

Fig.1 zeigt eine Hebeeinrichtung in Form eines Portalkranes, der beispielsweise zum Be- und Entladen von Schiffen in einem Hafen verwendet wird. Die Hebeeinrichtung weist eine tragende Struktur 3 auf, die entweder fest oder beweglich am Boden angeordnet ist. Im Falle einer beweglichen Anordnung kann die tragende Struktur 3 beispielsweise in Y-Richtung fahrbar auf Schienen angeordnet sein. Die tragende Struktur 3 weist einen Ausleger 4 auf, der fest mit der tragenden Struktur 3 verbunden ist. Auf diesem Ausleger 4 ist üblicherweise ein Tragelement 5 angeordnet, das in Längsrichtung des Auslegers 4, also in dem dargestellten Beispiel in X-Richtung beweglich ist. Beispielsweise kann ein Tragelement 5 mittels Rollen in Führungen am Ausleger 4 beweglich gelagert sein. Das Tragelement 5 ist üblicherweise mittels Halteelementen 6, z.B. ein Seil oder Gurt, mit einem Lastaufnahmeelement 7 zur Aufnahme einer Last 8 verbunden. Die Halteelemente 6 sind üblicherweise als Seile ausgeführt, wobei in den meisten Fällen vier Halteelemente 6 am Tragelement 5 angeordnet sind, es können aber auch mehr oder weniger Halteelemente 6 vorgesehen sein. Das Lastaufnahmeelement 7 ist damit über die Halteelemente 6 pendelnd am beweglichen Tragelement 5 angeordnet und ist damit schwingfähig.

Zur Aufnahme einer Last 8, wie z.B. eines Containers, ist die Seillänge $l_H$ zwischen Tragelement 5 und Lastaufnahmeelement 7 mittels eines Hubantriebs 2 verstellbar, wie in Fig.1 dargestellt z.B. in Z-Richtung. Damit kann das Lastaufnahmeelement 7 mit einer Hubgeschwindigkeit $v_H$ gehoben werden, also in Z-Richtung bewegt werden. Wenn die Halteelemente 6 als Seile ausgeführt sind, wird die Seillänge $l_H$ üblicherweise mittels einer oder mehrerer Seilwinden verstellt. Das Tragelement 5 kann am Ausleger 4 mittels eines Tragelementantriebes 9 mit einer Tragelementgeschwindigkeit $v_T$ bewegt werden. Allgemein gesprochen ist das Tragelement 5 der bewegte Teil des schwingfähigen technischen Systems und das damit verbundene Lastaufnahmeelement 7 der schwingfähige Teil des schwingfähigen technischen Systems 1. Die Tragelementposition $x_T$ des Tragelements 5 und die Lastposition $x_L$ des Lastaufnahmeelements 7 wird jeweils auf ein gegebenes Koordinatensystem bezogen. Aufgrund einer möglichen Pendelschwingung des Lastaufnahmeelements 7 (in Fig.1 strichliert angedeutet) lenkt das Lastaufnahmeelement 7 um den Winkel θ aus und es stimmt die Tragelementposition $x_T$ und die Lastposition $x_L$ üblicherweise nicht überein. Es sind natürlich auch Pendelschwingungen in die anderen Richtungen möglich, also beispielsweise in Y-Richtung bei Bewegung der tragenden Struktur 3 in Y-Richtung oder in Z-Richtung, wobei sich die Schwingungen auch überlagern können.

Zusätzlich zu einer Pendelschwingung des Lastaufnahmeelements 7 können auch Drehschwingungen des Lastaufnahmeelements 7 auftreten, wie anhand der Fig. 2a und 2b erläutert wird. Die gebogenen Doppelpfeile symbolisieren die möglichen Verdrehungen des Lastaufnahmeelements 7 um die jeweilige Achse. Hierbei sind Verdrehungen um die X-Achse (trim), die Y-Achse (list) und die Z-Achse (skew) möglich. Eine Verdrehung um die Z-Achse (also um die Hochachse) um den Winkel β ist in Fig. 2b dargestellt.

Allgemein gesprochen tritt eine Schwingung einer Schwingungsgröße des technischen Systems 1 auf. In Ausführungsbeispiel der Hebeeinrichtung aus Fig.1 tritt eine Schwingung in zumindest einem Bewegungsfreiheitsgrad (X, Y, Z oder eine Drehschwingung um eine der drei Achsen) des Lastaufnahmeelements 7 des technischen Systems 1, als Schwingungsgröße y, auf. Es ist offensichtlich, dass gleichzeitig Schwingungen mehrerer Schwingungsgrößen, beispielsweise eine Pendelschwingung in X-Richtung und eine Drehschwingung um die Hochachse einer Hebeeinrichtung, auftreten können.

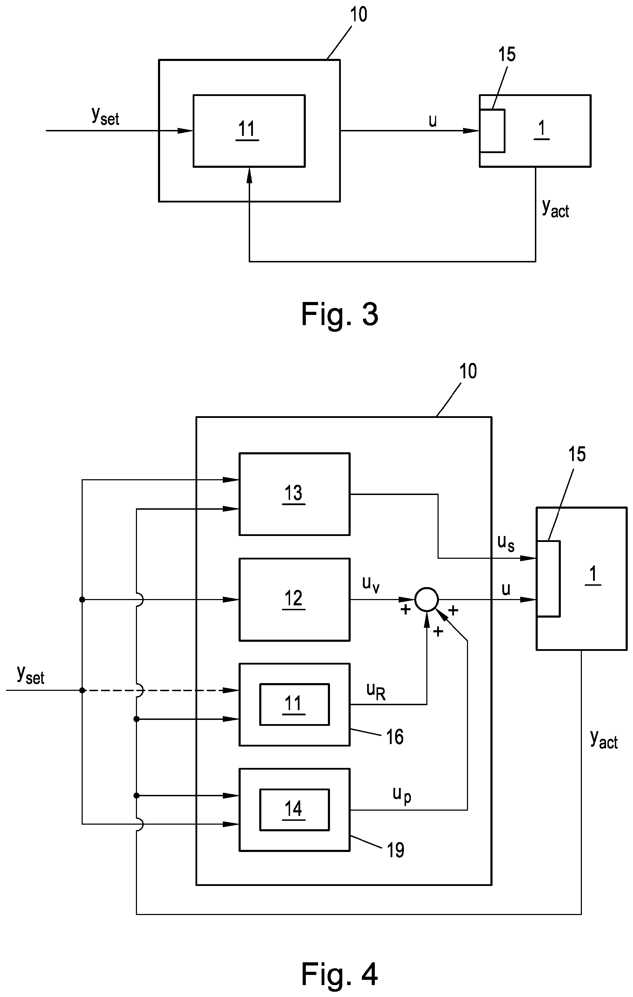

Schwingungen einer Schwingungsgröße y des schwingfähigen technischen Systems 1 (z.B. einer Hebeeinrichtung) können durch innere oder äußere Anregungen bewirkt werden. Innere Anregungen ergeben sich aus dem Betrieb des technischen Systems, beispielsweise durch Bewegungen des bewegten Teils (tragende Struktur 3 und/oder Tragelement 5) der Hebeeinrichtung oder durch ungleichmäßig verteilte Lasten 8. Äußere Anregungen können äußere Einflüsse, wie z.B. Wind, sein. Solche Schwingungen sind im Betrieb des technischen Systems 1 störend, beispielsweise weil damit der erzielbare Durchsatz eines Kransystems reduziert wird oder weil unkontrollierte Schwingungen eine Gefahr für Bedienpersonal und/oder die Last darstellen, und sollen im Betrieb ausgeregelt werden. "Ausregeln" bedeutet dabei ein, vorzugsweise möglichst rasches, Reduzieren auftretender Schwingungsamplituden. Hierfür ist für das technische System 1 ein Betriebsregler 10 (Hardware und/oder Software) vorgesehen, in dem eine erfindungsgemäße Schwingungsregeleinheit 16 mit einem Schwingungsregler 11 implementiert ist, der solche Schwingungen der zumindest einen Schwingungsgröße y ausregelt, und der anhand der Fig.3 allgemein erläutert wird. Der Betriebsregler 10 kann auf einer eigenständigen Hardware implementiert sein, kann aber auch in einer Anlagensteuereinheit des technischen Systems 1 als Hardware implementiert sein.

Für die Schwingungsregelung kann dem Schwingungsregler 11 in jedem Zeitschritt der Regelung ein Sollwert $y_{set}$ für die jeweilig zu regelnde Schwingungsgröße vorgegeben werden. In der Regel benötigt der Schwingungsregler 11 aber keinen Sollwert $y_{set}$, da mit dem Schwingungsregler 11 nur die Schwingung ausgeregelt wird. In jedem Zeitschritt der Regelung berechnet der Schwingungsregler 11 einen neuen Wert der Steuergröße u. Für eine Drehschwingung in einer Hebeeinrichtung wie in Fig.2a, 2b dargestellt könnte der Sollwert $y_{set}$ beispielsweise ein Solldrehwinkel $\beta_{set}$, üblicher-

EP 3 653 562 B1

weise ein Winkel von Null, sein. Im Falle einer Pendelschwingung in einer Hebeeinrichtung wie in Fig.1 dargestellt wäre das beispielsweise ein Sollauslenkungswinkel $\theta_{set}$, üblicherweise ein Winkel von Null. Nachdem aber der Auslenkungswinkel $\theta$ proportional zur Lastposition $x_L$, der Tragelementeposition $x_T$ und der Seillänge $l_H$ ist (gleiches gilt analog auch für die Y-Richtung), gemäß dem

Zusammenhang $\theta = \arcsin \dfrac{x_L - x_T}{l_H}$ , könnte auch direkt eine Solllastposition $x_{Lset}$ als Sollwert $y_{set}$ verwendet werden. Da in einer Hebeeinrichtung vorzugsweise die Lastposition $x_L$ ($y_L$) geregelt wird, bietet sich das vorteilhafterweise an. Die Schwingungsgröße y ist dann die Lastposition $x_L$ ($y_L$). Wenn mehrere Schwingungen ausgeregelt werden, dann kann der Sollwert $y_{set}$ auch ein Vektor mit mehreren Einträgen sein, beispielsweise ein Solldrehwinkel $\beta$ und eine Solllastposition $x_{Lset}$ ($y_{set}$).

Ein Istwert $y_{act}$ wird am schwingfähigen technischen System 1 gemessen oder auch aus gemessenen oder anderweitig verfügbaren Größen berechnet, beispielsweise in einem hinlänglich bekannten Beobachter. Der Istwert $y_{act}$ wird dem Schwingungsregler 11 zugeführt, der daraus und aus dem Sollwert $y_{set}$ nach dem implementierten Regelgesetz (üblicherweise Software) eine Stellgröße u berechnet, mit der ein Aktuator 15 des schwingfähigen technischen Systems 1 angesteuert wird. In analoger Weise kann der Istwert $y_{act}$ bei mehreren Schwingungsgrößen y ein Vektor mit mehreren Einträgen für die benötigten Istwerte sein. Der Aktuator 15 ist beispielsweise der Tragelementantrieb 9, der als Stellgröße u eine Tragelementgeschwindigkeit $v_T$ einstellt, um auf die Pendelschwingung in X-Richtung Einfluss zu nehmen. Der Aktuator 15 kann auch eine Seillängenverstelleinheit oder ein Hubantrieb 2 sein, um die Seillänge $l_H$ zumindest eines Halteelementes 6 zu verstellen, um auf eine Drehschwingung um die Hochachse Einfluss zu nehmen. In diesem Fall kann die Stellgröße u eine Verstellgeschwindigkeit $v_S$ oder eine Verstellposition des zumindest einen Haltelements 6 sein. Auch mehrere Aktuatoren 15 sind möglich. Bei anderen Ausführungen des schwingfähigen technischen Systems 1 sind natürlich auch andere Sollwerte $y_{set}$, Istwerte $y_{act}$, Stellgrößen u und/oder Aktuatoren 15 denkbar.

Im Betriebsregler 10 können auch noch andere Regler (üblicherweise als Hardware und/oder Software) implementiert sein, wie anhand der Fig.4 näher erläutert wird. In einer Vorsteuerung 12 kann aus dem Sollwert $y_{set}$ eine Vorsteuerstellgröße $u_V$, beispielsweise eine Tragelementgeschwindigkeit $v_{TV}$ oder Verstellgeschwindigkeit $v_{SV}$ der Seilverstellung, berechnet werden. Dazu kann ein beliebiges Vorsteuergesetz implementiert sein, das aus dem Sollwert $y_{set}$ die Vorsteuerstellgröße $u_V$ berechnet, also $u_V = f(y_{set})$. In der Vorsteuerung 12 können, abhängig von der konkreten Implementierung der Vorsteuerung 12, noch weitere Messwerte oder geschätzte Werte bestimmter physikalischen Größen des technischen Systems 1 berücksichtigt werden. Dazu kann der Sollwert $y_{set}$ auch ein Vektor mit mehreren Vektorelementen sein, beispielsweise eine Solllastposition $x_{Lset}$ (auch in mehreren Richtungen X, Y, Z) oder ein

Verdrehwinkel $\beta$, und zeitliche Ableitungen des Sollwerts $y_{set}$, also beispielsweise $\dfrac{dy_{set}}{dt}$ (Geschwindigkeit),

$\dfrac{d^2 y_{set}}{dt^2}$ (Beschleunigung), $\dfrac{d^3 y_{set}}{dt^3}$ (Ruck) und/oder $\dfrac{d^4 y_{set}}{dt^4}$ (Stoß) und gegebenenfalls auch noch höhere Ableitungen. Die Vorsteuerstellgröße $u_V$ wird dann wie üblich mit der vom Schwingungsregler 11 berechneten Reglerstellgröße $u_R$ addiert, um die Stellgröße u für den Aktuator 15 des mechanischen Systems 1 zu berechnen. Der Schwingungsregler 11 muss dabei nur mehr kleine, nach der Vorsteuerung verbleibende Regelabweichungen ausregeln.

Ebenso kann bei einer Hebeeinrichtung ein Seillängenregler 13 (üblicherweise Software) implementiert sein, der aus dem Sollwert $y_{set}$ eine Stellgröße $u_S$ für eine Seillängenverstellung, beispielsweise über eine Seillängenverstelleinheit als Aktuator 15, berechnet. Bei anderen technischen Systemen ist natürlich kein Seillängenregler 13 vorgesehen, oder wird durch die Regelung einer anderen zu regelnden Größe ersetzt. Auch für die Regelung der Seillänge $l_H$ könnte in der Vorsteuerung 12 eine Vorsteuerstellgröße für die Seillängenverstellung berechnet werden, die dann mit der im Seillängenregler 13 berechneten Stellgröße zur Stellgröße $u_S$ addiert wird.

Weiters kann auch ein Schwingungsgrößenregler 14 in einer Schwingungsgrößenregeleinheit 19 implementiert sein, der beispielsweise die Position des bewegten Teils des schwingfähigen technischen Systems 1, also beispielsweise des Tragelements 5 oder die Position eines Fahrzeugs eines Langstatorlinearmotors, nach dem implementierten Regelgesetz, gegebenenfalls auch in mehreren Richtungen X, Y, einregelt. Ohne den Schwingungsgrößenregler 14 wird nur die störende Schwingung der Schwingungsgröße y, also beispielsweise nur eine Pendelschwingung und/oder Drehschwingung des Lastaufnahmeelements 7 in der aktuellen Position ausgeregelt. Mit diesem Schwingungsgrößenregler 14 wird zusätzlich noch die Schwingungsgröße y, z.B. die Lastposition $x_L$ ($y_L$), auf einen vorgegebenen Sollwert (der in $y_{set}$ enthalten ist) eingeregelt. Die vom Schwingungsgrößenregler 14 berechnete Stellgröße $u_P$ kann zu den anderen Stellgrößen $u_V$, $u_R$ addiert werden, um die Stellgröße u für den zumindest einen Aktuator 15 zu erhalten. Die Vorsteuerung 12 und der Schwingungsgrößenregler 14 können beliebig mit dem Schwingungsregler 11 kombiniert werden. Es ist auch unerheblich, ob die einzelnen Regler alle oder teilweise als eigenständige Hardware mit entsprechender Software implementiert werden oder ob die Regler alle oder teilweise als Software auf einer gemeinsamen Hardware implementiert sind. Die einzelnen Regler werden nachfolgend im Detail erläutert.

Es ist offensichtlich, dass der Aktuator 15 auch aus mehreren verschiedenen Aktuatoren bestehen kann, je nach Ausführung des technischen Systems 1 und/oder je nachdem welche Regler implementiert bzw. eingesetzt werden.

Der Sollwert $y_{set}$ für eine Schwingungsgröße, z.B. Lastposition $x_L$ oder Verdrehwinkel $\beta$, kann entweder zu jedem Zeitschritt der Regelung, üblicherweise im 1-100 Millisekundenbereich, vorgegeben werden. Es kann für die Schwingungsgröße als Sollwerte $y_{set}$ aber auch eine Trajektorie definiert sein. Die Trajektorie enthält dabei nicht nur einen zeitlichen Verlauf der Schwingungsgröße, beispielsweise einen zeitlichen Verlauf von Positions- oder Winkelvorgaben, sondern auch einen zeitlichen Verlauf dynamischer Größen (Kinematik), also von zeitlichen Ableitungen des zeitlichen Verlaufs der Schwingungsgröße. Die Trajektorie kann bei einer Hebeeinrichtung beispielsweise verwendet werden, um das Lastaufnahmeelement 7 von einer Anfangsposition entlang eines bestimmten Weges und mit einer bestimmten Kinematik zu einer Endposition zu bewegen. Eine Trajektorie kommt insbesondere bei Hebeeinrichtungen zur Anwendungen, um das Lastaufnahmeelement 7 möglichst rasch und sicher von der Anfangsposition zur Endposition zu bewegen.

Für den Entwurf eines Schwingungsreglers 11 benötigt man zuerst ein Modell der zu regelnden Strecke, also ein Modell der Schwingung der zu regelnden Schwingungsgröße y. Die Bewegung des Lastaufnahmeelements 7 einer Hebeeinrichtung als technisches System 1 kann beispielsweise allgemein in Zustandsraumdarstellung mit einer Systemgleichung in der Form

$$
\frac{d}{dt}\begin{pmatrix} y \\ \dfrac{dy}{dt} \\ \dfrac{d^2y}{dt^2} \end{pmatrix} = \begin{pmatrix} 0 & 1 & 0 \\ 0 & 0 & 1 \\ 0 & -\omega_0^2 & -2\xi_0\omega_0 \end{pmatrix} \begin{pmatrix} y \\ \dfrac{dy}{dt} \\ \dfrac{d^2y}{dt^2} \end{pmatrix} + \begin{pmatrix} i_B\omega_0^2 \\ 0 \\ 0 \end{pmatrix} u
$$

modelliert werden. Dieses Modell ergibt sich aus der mathematischen Modellierung der Schwingung des Lastaufnahmeelements 7 als schwingfähiger Teil des technischen Systems 1. Darin steht y für die zu regelnde Schwingungsgröße y in einem Bewegungsfreiheitsgrad, also beispielsweise die Lastposition $x_L$ ($y_L$) oder der Verdrehwinkel $\beta$. u ist die Stellgröße, beispielsweise eine Tragelementgeschwindigkeit $v_T$ des Tragelements 5 oder eine Verstellgeschwindigkeit $v_S$ eines Haltelements 6. $i_B$ ist eine bekannte Streckenverstärkung, $\xi_0$ eine Systemdämpfung und $\omega_0$ die Eigenfrequenz. Diese Parameter sind daher Systemparameter des schwingfähigen technischen Systems 1 und ergeben sich aus der konkreten Realisierung des technischen Systems 1 und können als bekannt vorausgesetzt werden. Diese Systemparameter sind entweder gegeben oder bekannt oder können auch mit bekannten Systemidentifikationsmethoden ermittelt werden, beispielsweise mittels Parameterschätzverfahren. Dabei wird das technische System 1 angeregt und die Reaktion ausgewertet, um die Systemparameter zu schätzen. Das gilt grundsätzlich für jedes schwingfähige technische System 1. Die Eigenfrequenz $\omega_0$ ist bei einem Lastaufnahmeelement 7 einer Hebeeinrichtung abhängig von der Seillänge $l_H$ und kann in Abhängigkeit von der Seillänge $l_H$ hinterlegt sein (beispielsweise als Kennlinie oder Kennfeld), oder kann berechnet werden. Für eine Pendelschwingung ergibt sich die Eigenfrequenz $\omega_0 = \sqrt{\dfrac{g}{l_H}}$ mit der Erdbeschleunigung g. Für eine Drehschwingung kann die Eigenfrequenz $\omega_0$ für verschiedene Seillängen $l_H$ identifiziert und hinterlegt werden.

Selbstverständlich kann sich für ein anderes schwingfähiges technisches System 1 auch eine andere Systemgleichung für die Bewegung des schwingfähigen Teils, also für die Schwingungsgröße y, ergeben. Ebenso ist es nicht erforderlich das technische System 1 in der Zustandsraumdarstellung zu modellieren. Die obige Systemgleichung ist daher lediglich beispielhaft und dient der Erläuterung der Erfindung.

Für die zugrundeliegende Systemgleichung ist nun ein Schwingungsregler 11 mit einem gewünschten Regelgesetz zu entwerfen, was mit hinlänglich bekannten regelungstechnischen Methoden, wie beispielweise Satz von Ackermann, Polvorgabe, Frequenzkennlinienverfahren, etc., erfolgen kann.

Erfindungsgemäß wird auf Basis der Systemgleichung ein Schwingungsregler 11 mit einem Regelgesetz entworfen, das eine Stellgröße u berechnet, um die Schwingung auszuregeln, also zu dämpfen. Vorzugsweise wird ein Schwingungsregler 11 entworfen, der eine gewünschte Dämpfung $\xi_{set}$ einbringt, um das schwach gedämpfte oder ungedämpfte schwingfähige technische System 1 zu dämpfen. Es ergibt sich damit allgemein ein Regelgesetz für den Schwingungsregler 11 in der Form $u = f(\xi_{set})$, beispielsweise für die obige Systemgleichung

$$u = \left( \frac{d^2 y_{set}}{dt^2} - \frac{d^2 y_{act}}{dt^2} \right) \frac{2\left( \xi_{set} - \xi_0 \right)}{\omega_0 i_B}$$

. Darin steht $y_{set}$ für den Sollwert der zu regelnden Schwingungsgröße y, der

beispielsweise in $y_{set}$ vorgeben wird. Für andere Systemgleichungen ergeben sich natürlich auch andere Regelgesetze.

Wie eingangs erläutert ist die mit dem Schwingungsregler 11 berechnete Stellgröße u ($u_R$) und/oder eine zeitliche Ableitung der Stellgröße u oftmals aus physikalischen Gründen je nach Implementierung des Aktuators 15 beschränkt, also beispielsweise $u_{min} \leq u \leq u_{max}$ und $u_{min} \leq \dot{u} \leq \dot{u}_{max}$ . Diese Beschränkung kann zu ungewolltem Reglungsverhalten und zu Instabilität führen. Um dieses Problem zu umgehen, wird erfindungsgemäß nicht die vom Schwingungsregler 11 berechnete Stellgröße u wie bisher nachträglich beschränkt, sondern es wird die Beschränkung

$\frac{d^n u}{dt^n}_{min}$ , $\frac{d^n u}{dt^n}_{max}$ zumindest einer zeitlichen Ableitung $\frac{d^n u}{dt^n}$ , $n{\geq}1$ der Stellgröße u direkt im Regelgesetz des Schwingungsreglers 11 bei der Berechnung der Stellgröße u berücksichtigt, also z.B. $u = f(\frac{d^n u}{dt^n}_{min} , \frac{d^n u}{dt^n}_{max})$ oder

bei einem Regler, der eine Dämpfung $\xi_{set}$ einbringt $u = f(\xi_{set}, \frac{d^n u}{dt^n}_{min} , \frac{d^n u}{dt^n}_{max})$, beispielsweise die Beschränkung

der ersten zeitlichen Ableitung $\dot{u}_{min}$ , $\dot{u}_{max}$ der Stellgröße u. Die vom Schwingungsregler 11 berechnete Stellgröße u ist damit direkt abhängig von zumindest einer Beschränkung einer zeitlichen Ableitung der Stellgröße u. Üblicherweise ist die Stellgröße u auch eine Funktion des Regelfehlers e, der sich wiederum aus dem Sollwert $y_{set}$ und dem Istwertes $y_{act}$, oder zeitlicher Ableitungen davon, ergibt (in der Regel die Differenz daraus).

Hierzu ist anzumerken, dass die Beschränkung nicht zwingend ein Bereich mit einer oberen und unteren Grenze sein muss, sondern auch nur eine obere oder untere Grenze denkbar ist, womit nur eine maximale oder minimale Beschränkung zu berücksichtigen ist und die entsprechende nicht vorhandene Beschränkung bei der Berechnung von u wegfallen würde. Durch die unmittelbare Berücksichtigung der Beschränkung $\frac{d^n u}{dt^n}_{min}$ , $\frac{d^n u}{dt^n}_{max}$ einer zeitlichen Ableitung $\frac{d^n}{dt^n}$ der Stellgröße u in der Berechnung der Stellgröße u, fallen die damit verbundenen negativen Auswirkungen bei einer nachträglichen Beschränkung weg. Die so berechnete Stellgröße u erfüllt schon die Beschränkung, weshalb die berechnete Stellgröße u nachträglich nicht mehr beschränkt werden muss. Vorzugsweise kann zusätzlich auch die Beschränkung der Stellgröße u selbst, also $u_{min}$ und/oder $u_{max}$, in der Berechnung der Stellgröße u berücksichtigt werden, also z.B. $u = f(e, u_{min}, u_{max}, \frac{d^n u}{dt^n}_{min} , \frac{d^n u}{dt^n}_{max})$, oder bei einem Regelgesetz mit Dämpfung

$\xi_{set}$ auch $u = f(e, \xi_{set}, u_{min}, u_{max}, \frac{d^n u}{dt^n}_{min} , \frac{d^n u}{dt^n}_{max})$ .

Die Berücksichtigung einer Beschränkung $\frac{d^n u}{dt^n}_{min}$ , $\frac{d^n u}{dt^n}_{max}$ der zumindest einen zeitlichen Ableitung der Stellgröße u kann im Regelgesetz auch auf andere Weise erfolgen. In einer möglichen Ausgestaltung enthält das Regelgesetz des Schwingungsreglers 11 zumindest einen Reglerparameter RP, der abhängig von der Beschränkung

$\frac{d^n u}{dt^n}_{min}$ und/oder $\frac{d^n u}{dt^n}_{max}$ der zumindest einen zeitlichen Ableitung der Stellgröße u, und gegebenenfalls auch von

anderen Beschränkungen $u_{min}$ und/oder $u_{max}$ der Stellgröße u, ist, also z.B. $u = f(e, RP(\frac{d^n u}{dt^n}_{min} , \frac{d^n u}{dt^n}_{max}))$ . Der

Reglerparameter RP des Schwingungsreglers 11 kann zusätzlich noch abhängig von einem Systemzustand sein, der die Schwingung der zu regelnden Schwingungsgröße (z.B. $x_L$, $y_L$, $\beta$) des technischen Systems 1 charakterisiert, beispielsweise eine Schwingungsamplitude A und/oder zumindest einer zeitlichen Ableitung $\frac{d^n A}{dt^n}$ , $n{\geq}1$ der Schwingungsam-

plitude A.

In einer bevorzugten Ausgestaltung wird die Beschränkung $\frac{d^n u}{dt^n}_{min}$ und/oder $\frac{d^n u}{dt^n}_{max}$ der zumindest einen zeitlichen Ableitung der Stellgröße u, und gegebenenfalls auch die Beschränkung $u_{min}$ und/oder $u_{max}$ der Stellgröße u selbst, in einem Regelgesetz mit Dämpfung $\xi_{set}$ (als Reglerparameter RP des Schwingungsreglers 11) verwendet, um die Dämpfung $\xi_{set}$ im Regelgesetz anzupassen. Damit ist die Dämpfung $\xi_{set}$, und folglich auch die damit berechnete Stellgröße u, selbst von den Beschränkungen der Stellgröße u abhängig, also

$\xi_{set} = f(u_{min}, u_{max}, \frac{d^n u}{dt^n}_{min}, \frac{d^n u}{dt^n}_{max})$ , wobei hierbei wiederum zumindest die Beschränkung $\frac{d^n u}{dt^n}_{min}, \frac{d^n u}{dt^n}_{max}$ zumindest einer zeitlichen Ableitung $\frac{d^n u}{dt^n}$ , n≥1 der Stellgröße u berücksichtigt wird. Das Regelgesetz des Schwingungsreglers 11 ergibt sich dann zu $u = f(\xi_{set}(u_{min}, u_{max}, \frac{d^n u}{dt^n}_{min}, \frac{d^n u}{dt^n}_{max}))$ , wobei $u_{min}$, $u_{max}$ wieder optional sind. Die Stellgröße u ist damit wieder abhängig von zumindest einer Beschränkung $\frac{d^n u}{dt^n}_{min}, \frac{d^n u}{dt^n}_{max}$ zumindest einer zeitlichen Ableitung $\frac{d^n u}{dt^n}$ , n≥1 der Stellgröße u. Das obige Regelgesetz könnte in diesem Fall beispielsweise als $u = \left(\frac{d^2 y_{set}}{dt^2} - \frac{d^2 y_{act}}{dt^2}\right)\frac{2\left(\xi_{set}\left(u_{min}, u_{max}, \dot{u}_{min}, \dot{u}_{max}\right) - \xi_0\right)}{\omega_0 i_B}$ verwendet werden mit einer Beschränkung der 1.Ableitung der Stellgröße u und dem Regelfehler e in der Form $\left(\frac{d^2 y_{set}}{dt^2} - \frac{d^2 y_{act}}{dt^2}\right)$ .

Die Dämpfung $\xi_{set}$, oder allgemein der Reglerparameter RP, wird bevorzugt abhängig von der Schwingungsamplitude A und/oder einer Amplitude $A_n$, n≥1 zumindest einer zeitlichen Ableitung der zu regelnden Schwingungsgröße y (z.B. $x_L$, $y_L$, $\beta$) des technischen Systems 1 angepasst, also $\xi_{set} = f(A, A_n, u_{min}, u_{max}, \frac{d^n u}{dt^n}_{min}, \frac{d^n u}{dt^n}_{max})$ , wobei wiederum nicht alle Terme enthalten sein müssen, zumindest aber ein Term mit der Schwingungsamplitude A oder der Amplitude $A_n$ einer zeitlichen Ableitung der Schwingungsgröße y und zumindest eine Beschränkung einer zeitlichen Ableitung der Stellgröße u enthalten ist. Wenn die aktuelle Schwingungsamplitude A klein ist, kann stärker gedämpft werden, als bei größeren Schwingungsamplituden A, womit die Dämpfung $\xi_{set}$, oder allgemein der Reglerparameter RP, adaptiv an den jeweiligen Schwingungszustand angepasst werden kann.

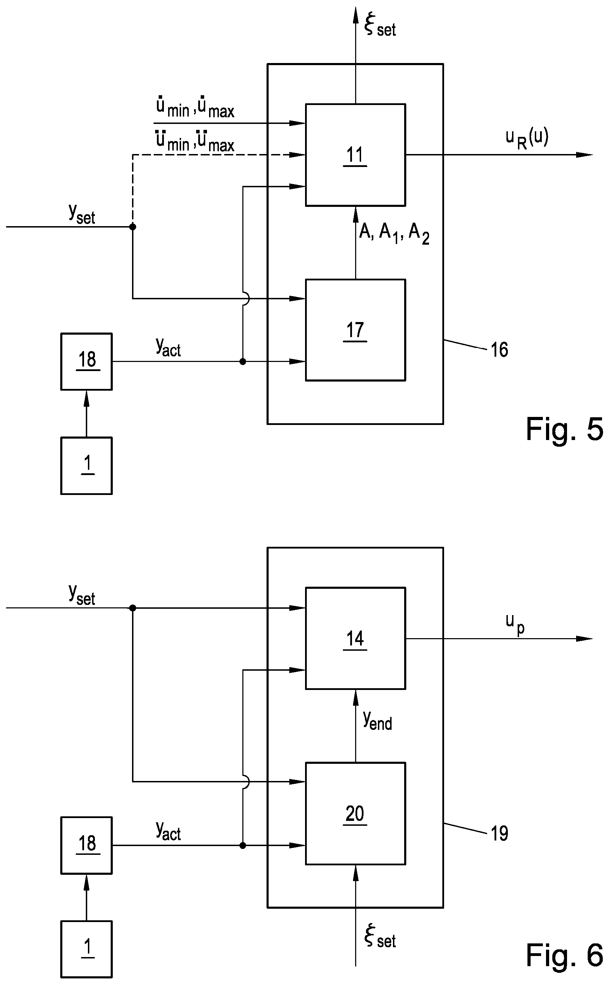

Die aktuelle Schwingungsamplitude A kann entweder mit geeigneten Messsensoren, beispielsweise mittels eines Kamerasystems zur Erfassung und Auswertung der Schwingung, gemessen werden oder kann mit einem Schwingungsamplitudenbeobachter 17 geschätzt werden. Der Schwingungsamplitudenbeobachter 17 kann in der Schwingungsregeleinheit 16 integriert sein (wie in Fig.5), beispielsweise als Software auf einer gemeinsamen Hardware, oder kann auch als separate Hardware und Software ausgeführt sein.

Ein Schwingungsamplitudenbeobachter 17 könnte auf verschiedene Weise implementiert werden, z.B. als Kalmanfilter. In einer vorteilhaften Ausgestaltung wird ein Schwingungsamplitudenbeobachter 17 verwendet, der aus den zeitlichen Ableitungen der Istwerte $y_{act}$ und der Sollwerte $y_{set}$ die maximale Schwingungsamplitude A und/oder (je nach Bedarf) die Amplitude der zeitlichen Ableitungen der Schwingungsgröße y schätzt. Hierfür wird eine Sinusschwingung für den Regelfehler der ersten und zweiten zeitlichen Ableitung der zu regelnden Schwingungsgröße y angesetzt, in der Form $\frac{dy_{set}}{dt} - \frac{dy_{act}}{dt} = A_1 \sin\left(\omega_0 t\right)$ und $\frac{d^2 y_{set}}{dt^2} - \frac{d^2 y_{act}}{dt^2} = A_1 \omega_0 \cos\left(\omega_0 t\right)$ . Daraus kann die maximale Schwingungsamplitude A und die Amplituden $A_n$ der zeitlichen Ableitungen der Schwingungsgröße y einfach berechnet werden und ergeben sich zu $A_3 = A_2\omega_0 = A_1\omega_0^2 = A\omega_0^3$ .

Der Vorteil dieses Ansatzes ergibt sich zusammen mit dem obigen vorteilhaften Regelgesetz des Schwingungsreglers 11 zum aktiven Einbringen einer Dämpfung $\xi_{set}$, in dem auch der Regelfehler $e = \dfrac{d^2 y_{set}}{dt^2} - \dfrac{d^2 y_{act}}{dt^2}$ vorkommt.

Der Ansatz ermöglicht die einfache Berücksichtigung der maximalen Schwingungsamplitude A in der Dämpfung $\xi_{set}$, beispielsweise wie folgt

$$\xi_{set} = min\left( \frac{\omega_0 i_B \, min\left(\left|\ddot{u}_{min}\right|, \left|\ddot{u}_{max}\right|\right)}{2A_1 \omega_0} + \xi_0, \; \frac{\omega_0 i_B \, min\left(\left|\ddot{u}_{min}\right|, \left|\ddot{u}_{max}\right|\right)}{2A_1 \omega_0{}^2} + \xi_0, \; \xi_{set0} \right).$$

Darin ist die Dämpfung $\xi_{set0}$ ein vorgegebener oder vorgebbarer Einstellparameter des Schwingungsreglers 11. Wenn andere zeitliche Ableitungen $\dfrac{d^n}{dt^n}$ der Stellgröße u beschränkt sind, sind natürlich andere und/oder zusätzliche und/oder weniger Terme zu berücksichtigen, beispielsweise nur für $\dot{u}$ oder nur für $\ddot{u}$ oder zusätzlich für $\dddot{u}$. Damit fließen die Beschränkungen über die Dämpfung $\xi_{set}$ direkt in die Berechnung der Stellgröße u im Regelgesetz des Schwingungsreglers 11 ein und müssen nicht mehr nachträglich angewendet werden.

Dieser Ansatz kann auch für eine Totzeitkorrektur genutzt werden. Die Totzeit Tt des schwingfähigen technischen Systems ist die Zeit die zwischen dem Verändern der Stellgröße u und der entsprechenden Veränderung des Istwerts $y_{act}$ vergeht und kann als bekannt vorausgesetzt werden. Die Totzeit Tt kann beispielsweise gemessen werden oder ebenfalls durch Identifikationsmethoden ermittelt werden. Für die Totzeitkorrektur wird der um die Totzeit $T_t$ in der Zukunft liegende Regelfehler berechnet und für die Berechnung der Stellgröße u verwendet. Für den Regelfehler

$e = \left( \dfrac{d^2 y_{set}}{dt^2} - \dfrac{d^2 y_{act}}{dt^2} \right)$ wurde der Ansatz $e = A_2 \cos\left( \underbrace{\dfrac{\omega_0 t}{}}_{\varphi_{act}} \right)$ gewählt. Daraus kann der aktuelle Phasenwinkel

$\varphi_{act}$ aus $\varphi_{act} = a \cos\left( \dfrac{e}{A_2} \right)$ berechnet werden. Der zukünftige Regelfehler $e_t = \left( \dfrac{d^2 y_{set}}{dt^2} - \dfrac{d^2 y_{act}}{dt^2} \right)_t$ ergibt sich

dann aus $e_t = A_2 \cos(\varphi_{act} + \Delta\varphi)$, mit $\Delta\varphi = T_t \cdot \omega_0$. Für das oben beschriebene Regelgesetz ergibt sich die Stellgröße u dann beispielsweise zu $u = e_t \dfrac{2\left( \xi_{set}\left( u_{min}, u_{max}, \dot{u}_{min}, \dot{u}_{max} \right) - \xi_0 \right)}{\omega_0 i_B}$ , oder allgemein zu

$u = f(e_t, u_{min}, u_{max}, \dfrac{d^n u}{dt^n}{}_{min}, \dfrac{d^n u}{dt^n}{}_{max})$ oder $u = f(e_t, \xi_{set}, u_{min}, u_{max}, \dfrac{d^n u}{dt^n}{}_{min}, \dfrac{d^n u}{dt^n}{}_{max})$ oder

$u = f(e, RP(u_{min}, u_{max}, \dfrac{d^n u}{dt^n}{}_{min}, \dfrac{d^n u}{dt^n}{}_{max}))$ oder $u = f(e_t, \xi_{set}(u_{min}, u_{max}, \dfrac{d^n u}{dt^n}{}_{min}, \dfrac{d^n u}{dt^n}{}_{max}))$, wobei wiederum nicht alle Teile $u_{min}$, $u_{max}$ $\dfrac{d^n u}{dt^n}{}_{min}$, $\dfrac{d^n u}{dt^n}{}_{max}$ enthalten sein müssen, sondern nur zumindest eine zeitliche Ableitung

einer Beschränkung $\dfrac{d^n u}{dt^n}{}_{min}$, $\dfrac{d^n u}{dt^n}{}_{max}$ .

Im Ausführungsbeispiel nach Fig.5 berechnet der Schwingungsamplitudenbeobachter 17 aus den Istwerten $y_{act}$, und/oder den zeitlichen Ableitungen der Istwert $y_{act}$, und Sollwerten $y_{set}$, und/oder den zeitlichen Ableitungen der Istwert $y_{set}$, des technischen Systems 1, beispielsweise $x_L$, $\dfrac{d^n x_L}{dt^n}$ , $x_T$ und $\omega_0$, die maximale Schwingungsamplitude A und die benötigten Amplituden $A_n$ z.B. $A_1$, $A_2$, der Schwingung der zeitlichen Abweichungen der Schwingungsgröße y. Diese werden im Schwingungsregler 11 verwendet, um die Dämpfung $\xi_{set}$ im Regelgesetz anzupassen, beispielsweise in jedem Zeitschritt der Regelung oder in jedem x-ten Zeitschritt der Regelung, und daraus die Stellgröße u ($u_R$) zu berechnen. Die aktuelle Dämpfung $\xi_{set}$ kann auch ausgegeben werden, um in anderen Komponenten des Betriebsregler 10 verwendet werden zu können.

Der Schwingungsgrößenregler 14 kann mit einem beliebigen Regelgesetz ausgeführt sein, beispielsweise als PD-, PI- oder PID-Regler oder als Zustandsregler, und soll in bekannter Weise den Fehler zwischen einer Vorgabe eines Sollwerts $y_{set}$ (z.B. $x_{Lset}$, $y_{Lset}$, $\beta_{set}$) der zu regelnden Schwingungsgröße y und dem Istwert $y_{act}$ der zu regelnden Schwingungsgröße y ausregeln. Der Entwurf eines solchen Reglers ist hinlänglich bekannt.

In einer vorteilhaften Ausgestaltung wird im Schwingungsgrößenregler 14 nicht wie üblich der Regelfehler zwischen dem Sollwert $y_{set}$ und dem Istwert $y_{act}$ ausgeregelt, sondern die Abweichung zwischen einem geschätzten Endwert $y_{end}$ der Schwingungsgröße, beispielsweise einer geschätzten Endposition $x_{Lend}$, $y_{Lend}$ oder einem End-verdrehwinkel $\beta_{end}$, die sich nach dem Ausregeln der Schwingung der Schwingungsgröße einstellt, und dem Sollwert $y_{set}$. Damit wird eine vorteilhafte Entkopplung des Schwingungsregler 11, der auf die Istwerte $y_{act}$ abstellt, vom Schwingungsgrößenregler 14 erreicht, womit das Regelverhalten des Schwingungsreglers 11 durch die Schwingungsgrößenregelung nicht beeinflusst wird.

Nachdem der geschätzte Endwert $y_{end}$ nicht direkt gemessen werden kann, wird dieser vorzugsweise in einem Endwertbeobachter 20 aus anderen vorhandenen Messgrößen des technischen Systems 1 geschätzt, wie anhand von Fig.6 erläutert wird. Der Endwertbeobachter 20 könnte wiederum auf verschiedenste Weise implementiert werden. Eine einfache Realisierung kann beispielsweise als Bandsperrfilter, z.B. als Kerbfilter, ausgeführt sein. Vorzugsweise wird aber ein Zustandsbeobachter realisiert, der den Endwert $y_{end}$ der Schwingungsgröße als den Gleichanteil der zu regelnden Schwingungsgrößen y, z.B. $x_L$, $y_L$, $\beta$, beobachtet. Für den Endwertbeobachter 20 wird dann wieder eine Systemgleichung für die Schwingung der Schwingungsgröße verwendet, beispielsweise der Form

$$\frac{d}{dt}\begin{pmatrix} y_{end} \\ \tilde{y} \\ \dfrac{d\tilde{y}}{dt} \end{pmatrix} = \begin{pmatrix} 0 & 0 & 0 \\ 0 & 0 & 1 \\ 0 & -\omega_0^2 & -2\xi_{set}\omega_0 \end{pmatrix} \begin{pmatrix} y_{end} \\ \tilde{y} \\ \dfrac{d\tilde{y}}{dt} \end{pmatrix} + \begin{pmatrix} 1 \\ 0 \\ 0 \end{pmatrix} \frac{dy_{set}}{dt} \ .$$

Darin bezeichnet $\tilde{y}$ den Wechselanteil der zu regelnden Schwingungsgröße y. Ferner ist die Dämpfung $\xi_{set}$ enthalten, die vorzugsweise wie beschrieben im Schwingungsregler 11 adaptiv angepasst wird. Der letzte Teil mit der zeitlichen Ableitung des Sollwertes $y_{set}$ ist optional. Bei Verwendung wird der Sollwert $y_{set}$, oder konkret die zeitliche Ableitung des Sollwertes, systematisch berücksichtigt, was einer vorteilhaften Vorsteuerung gleichkommt. Für diese Systemgleichung kann mit hinlänglich bekannten Methoden ein Extended Kalmanfilter entworfen werden, um den Endwert $y_{end}$ zu berechnen.

Der Endwertbeobachter 20 könnte aber auch mit einem ähnlichen Ansatz wie der Schwingungsamplitudenbeobachter 17 entworfen werden, also z.B. $y = y_{end} + A_{\tilde{y}} \sin(\omega_0 t)$ mit der Amplitude $A_{\tilde{y}}$ des Wechselanteils $\tilde{y}$.

Nachdem die Systemparameter, insbesondere die Eigenfrequenz $\omega_0$, nicht konstant sein müssen, sondern von anderen Größen abhängig sein können, wie insbesondere die Eigenfrequenz $\omega_0$ die bei einer Hebeeinrichtung abhängig von der Seillänge $l_H$ ist, kann vorteilhafterweise auch eine adaptiver Schwingungsgrößenregler 14 entworfen werden. In einem PID-Regler sind beispielsweise als Reglerparameter des Schwingungsgrößenreglers 14 die Verstärkung $k_p$ (des Proportionalteils), die Nachstellzeit $T_N$ (des Integralteils) und die Vorhaltezeit $T_V$ (des Differentialteils) enthalten, die auf das jeweilige zu regelnde technische System 1 eingestellt werden müssen, um Stabilität und das gewünschte Regelverhalten sicherzustellen. Diese Reglerparameter sind üblicherweise abhängig von den Systemparametern, beispielsweise von der Systemverstärkung $i_B$, der Systemdämpfung $\xi_0$ und/oder der Eigenfrequenz $\omega_0$. Für einen adaptiven Schwingungsgrößenregler 14 können die Reglerparameter $k_p$, $T_N$, $T_V$ für ein Referenzsystem mit vorgegebenen Systemparametern, beispielsweise mit $i_{Bref} = 1$ und $\omega_{0ref} = 1$, auf ein gewünschtes Regelverhalten (z.B. Anstiegszeit, Überschwingen, etc.) eingestellt werden, was zu Referenzreglerparameter $k_{p0}$, $T_{N0}$, $T_{V0}$ führt. Beispielsweise könnte mittels Frequenzkennlinienverfahren aus einer gewünschten Anstiegszeit und gewünschtem Überschwingen die Regler-parameter $k_{p0}$, $T_{N0}$, $T_{V0}$ bestimmt werden. Die Reglerparameter können dann z.B. in der Form

$$k_p = \frac{k_{p0}}{i_B} \omega_0(l_H), \quad T_N = \frac{T_{N0}}{\omega_0(l_H)}, \quad T_V = \frac{T_{V0}}{\omega_0(l_H)}$$

berechnet werden und passen sich damit an die jeweiligen Systembedingungen, insbesondere Seillänge $l_H$, an. Für andere Regelgesetze, z.B. PI-Regler, oder andere Abhängigkeiten kann analog vorgegangen werden.

Für die mit dem Schwingungsgrößenregler 14 berechnete Stellgröße $u_P$ können wiederum Beschränkungen der Stellgröße u berücksichtigt werden. Wenn die Schwingungsgrößenregelung mit einer Vorsteuerung 12 kombiniert wird, werden sich nur sehr kleine Stellgrößen $u_P$ ergeben. Damit werden allfällige Beschränkungen kaum erreicht werden, weshalb es in diesem Fall kein Problem darstellt, wenn die Beschränkungen auf die berechneten Stellgrößen $u_P$ angewendet werden oder gar nicht berücksichtigt werden.

Für verschiedene Regler und Komponenten des Betriebsreglers 10 wird ein Istwert $y_{act}$ der zu regelnden Schwingungsgröße y, sowie zeitliche Ableitungen davon, insbesondere $\dfrac{dy}{dt}$ (also die Geschwindigkeit) und $\dfrac{d^2y}{dt^2}$ (also die Beschleunigung), möglicherweise auch höhere Ableitungen, benötigt. Die zu regelnde Schwingungsgröße y ist beispielsweise wieder die Lastposition $x_L$ ($y_L$) oder ein Drehwinkel β oder die Position eines Fahrzeugs eines Langstatorlinearmotors oder eine elektrische Spannung oder ein Hydraulikdruck. Die benötigten Istwerte $y_{act}$ können entweder am technischen System 1 mit geeigneten Messsensoren gemessen werden, oder in einem Zustandsbeobachter 18 aus anderen Messgrößen geschätzt werden. Zustandsbeobachter 18 sind hinlänglich in verschiedenen Ausgestaltungen bekannt, beispielsweise als Kalmanfilter, Extended Kalmanfilter oder Luenberger Beobachter. Für den Zustandsbeobachter 18 kann wieder eine Systemgleichung für die Schwingungsgröße y des technischen Systems 1 angeschrieben werden, für die Pendelschwingung in X-Richtung mit der Lastposition $x_L$ beispielsweise

$$\frac{d}{dt}\begin{pmatrix} x_L \\ \dfrac{dx_L}{dt} \end{pmatrix} = \begin{pmatrix} 0 & 1 \\ -\omega_0^2 & -2\xi_0\omega_0 \end{pmatrix}\begin{pmatrix} x_L \\ \dfrac{dx_L}{dt} \end{pmatrix} + \begin{pmatrix} 0 \\ i_B \end{pmatrix} x_T$$

. Für die anderen Bewegungsfreiheitsgrade der Hebeeinrichtung oder anderer technische Systeme 1 ergeben sich ähnliche Systemgleichungen. Für diese Systemgleichung kann dann der Zustandsbeobachter 18 mit bekannten Methoden entworfen werden, beispielsweise ein Kalmanfilter. Ein solcher Zustandsbeobachter 18 berechnet dann aus den vorhandenen Messgrößen, beispielsweise der Lastposition $x_L$ und der Position $x_T$ des bewegten Teils (oder aus anderen Messgrößen), des schwingfähigen technischen Systems 1 die erste und zweite zeitliche Ableitung (gegebenenfalls auch höhere Ableitungen) der Schwingungsgröße $\dfrac{dy}{dt}$, $\dfrac{d^2y}{dt^2}$, beispielsweise der Lastposition $\dfrac{dx_L}{dt}$, $\dfrac{d^2x_L}{dt^2}$. Für die anderen Bewegungsfreiheitsgrade oder andere Schwingungsgrößen y kann analog vorgegangen werden.

Der Schwingungsregler 11 kann natürlich auch Schwingungen mehrerer Schwingungsgrößen y eines technischen Systems 1 ausregeln, beispielsweise eine Pendelschwingung in X-Richtung und eine Drehschwingung um die Hochachse einer Hebeeinrichtung. Hierfür ist für zumindest eine, vorzugsweise für alle, zu regelnde Schwingungsgröße y der Schwingungsregler 11 wie oben beschrieben ausgeführt. Selbstverständlich kann auch für jede oder für mehrere zu regelnde Schwingungsgröße y eine eigene Schwingungsreglereinheit 16 mit Schwingungsreglern 11 vorgesehen sein.

**Patentansprüche**

1. Verfahren zum Ausregeln von Schwingungen zumindest einer zu regelnden Schwingungsgröße (y) eines schwingfähigen technischen Systems (1) mit einem Schwingungsregler (11) mit einem Regelgesetz, das aus einem Sollwert ($y_{set}$) und einem Istwert ($y_{act}$) und/oder einer zeitlichen Ableitung eines Sollwerts ($y_{set}$) und eines Istwerts ($y_{act}$) der zu regelnden Schwingungsgröße (y) eine Stellgröße (u) für einen Aktuator (15) des schwingfähigen technischen Systems (1) berechnet, wobei die berechnete Stellgröße (u) durch den Schwingungsregler (11) an den Aktuator (15) zur Einstellung übergeben wird, **dadurch gekennzeichnet, dass** im Regelgesetz zur Berechnung der Stellgröße (u) eine Beschränkung ($\dfrac{d^nu}{dt^n}_{min}$, $\dfrac{d^nu}{dt^n}_{max}$) zumindest einer zeitlichen Ableitung der mit dem Regelgesetz berechneten Stellgröße (u) berücksichtigt wird, sodass die vom Schwingungsregler (11) berechnete Stellgröße (u) direkt abhängig ist von der zumindest einen Beschränkung einer zeitlichen Ableitung der Stellgröße (u).

2. Verfahren nach Anspruch 1, **dadurch gekennzeichnet, dass** das Regelgesetz einen Reglerparameter RP enthält, der abhängig von der Beschränkung ($\dfrac{d^nu}{dt^n}_{min}$, $\dfrac{d^nu}{dt^n}_{max}$) der zumindest einen zeitlichen Ableitung der Stellgröße (u) ist.

**3.** Verfahren nach Anspruch 2, **dadurch gekennzeichnet, dass** das Regelgesetz eine in das schwingfähige technische System (1) einzubringende Dämpfung ($\xi_{set}$) als Reglerparameter RP enthält.

**4.** Verfahren nach Anspruch 2 oder 3, **dadurch gekennzeichnet, dass** der Reglerparameter RP abhängig von einem Systemzustand ist.

**5.** Verfahren nach Anspruch 4, **dadurch gekennzeichnet, dass** der Reglerparameter RP abhängig von einer Schwingungsamplitude (A) der Schwingung und/oder einer Amplitude ($A_n$) einer zeitlichen Ableitung der Schwingung ist.

**6.** Verfahren nach Anspruch 5, **dadurch gekennzeichnet, dass** ein Schwingungsamplitudenbeobachter (17) implementiert wird, der aus zeitlichen Ableitungen der Sollwerte ( $\frac{dy_{set}}{dt}, \frac{d^2y_{set}}{dt^2}$ ) und der Istwerte ( $\frac{dy_{act}}{dt}, \frac{d^2y_{act}}{dt^2}$ ) und/oder den Istwerten ($y_{act}$) und Sollwerten ($y_{set}$) der zu regelnden Schwingungsgröße (y) die Schwingungsamplitude (A) der Schwingung und/oder die Amplitude ($A_n$) einer zeitlichen Ableitung der Schwingung berechnet.

**7.** Verfahren nach einem der Ansprüche 1 bis 6, **dadurch gekennzeichnet, dass** bei der Berechnung der Stellgröße (u) eine Totzeit ($T_t$) des schwingfähigen technischen Systems (1) berücksichtigt wird.

**8.** Verfahren nach Anspruch 7, **dadurch gekennzeichnet, dass** ein um die Totzeit (Tt) in der Zukunft liegender Regelfehler (et) berechnet wird und dieser zukünftige Regelfehler (et) bei der Berechnung der Stellgröße (u) berücksichtigt wird.

**9.** Verfahren nach einem der Ansprüche 1 bis 8, **dadurch gekennzeichnet, dass** eine Vorsteuerung (12) implementiert wird, die aus Sollwerten ($y_{set}$) und/oder aus zumindest einer zeitlichen Ableitung eines Sollwerts ( $\frac{d^n y_{set}}{dt^n}$ ) der Schwingungsgröße (y) eine VorsteuerStellgröße ($u_V$) berechnet, die zur Ermittlung der Stellgröße (u) für den Aktuator (15) mit der vom Schwingungsregler (11) berechneten Stellgröße ($u_R$) addiert wird.

**10.** Verfahren nach einem der Ansprüche 1 bis 9, **dadurch gekennzeichnet, dass** ein Schwingungsgrößenregler (14) implementiert wird, der die Abweichung zwischen einem Sollwert ($y_{set}$) der zu regelnden Schwingungsgröße (y) und einem Endwert ($y_{end}$) der Schwingungsgröße (y), als der nach dem Ausregeln der Schwingung erreichte Wert der Schwingungsgröße (y), ausregelt.

**11.** Verfahren nach Anspruch 10, **dadurch gekennzeichnet, dass** der Endwert ($y_{end}$) in einem Endwertbeobachter (20) berechnet wird, der einen Gleichanteil der Schwingung der zu regelnden Schwingungsgröße (y) als Endwert ($y_{end}$) berechnet.

**12.** Schwingungsregler zum Ausregeln von Schwingungen zumindest einer zu regelnden Schwingungsgröße (y) eines schwingfähigen technischen Systems (1), wobei im Schwingungsregler (11) ein Regelgesetz implementiert ist, das aus einem Sollwert ($y_{set}$) und einem Istwert ($y_{act}$) und/oder einer zeitlichen Ableitung eines Sollwerts ($y_{set}$) und eines Istwerts ($y_{act}$) der zu regelnden Schwingungsgröße (y) eine Stellgröße (u) für einen Aktuator (15) des schwingfähigen technischen Systems (1) berechnet, **dadurch gekennzeichnet, dass** das Regelgesetz zur Berechnung der Stellgröße (u) eine Beschränkung ( $\frac{d^n u}{dt^n}_{min}, \frac{d^n u}{dt^n}_{max}$ ) zumindest einer zeitlichen Ableitung der mit dem Regelgesetz berechneten Stellgröße (u) berücksichtigt und der Schwingungsregler (11) die berechnete Stellgröße (u) an den Aktuator (15) zur Einstellung übergibt, sodass die vom Schwingungsregler (11) berechnete Stellgröße (u) direkt abhängig ist von der zumindest einen Beschränkung einer zeitlichen Ableitung der Stellgröße (u).

**13.** Schwingungsregler nach Anspruch 12, **dadurch gekennzeichnet, dass** das Regelgesetz einen Reglerparameter RP enthält, der abhängig von der Beschränkung ( $\frac{d^n u}{dt^n}_{min}$ , $\frac{d^n u}{dt^n}_{max}$ ) der zumindest einen zeitlichen Ableitung der Stellgröße (u) ist.

14. Schwingungsregler nach Anspruch 13, **dadurch gekennzeichnet, dass** der Reglerparameter RP abhängig von einer Schwingungsamplitude (A) der Schwingung und/oder von einer Amplitude ($A_n$) einer zeitlichen Ableitung der Schwingung ist.

15. Schwingungsregler nach Anspruch 14 , **dadurch gekennzeichnet, dass** ein Schwingungsamplitudenbeobachter (17) vorgesehen ist, der aus zeitlichen Ableitungen ( $\frac{dy_{act}}{dt}$ , $\frac{d^2 y_{act}}{dt^2}$ ) der Istwerte ($y_{act}$) und zeitlichen Ableitungen ( $\frac{dy_{set}}{dt}$ , $\frac{d^2 y_{set}}{dt^2}$ ) der Sollwerte ($y_{set}$) und/oder den Istwerten ($y_{act}$) und Sollwerten ($y_{set}$) der zu regelnden Schwingungsgröße (y) die Schwingungsamplitude (A) der Schwingung und/oder die Amplitude ($A_n$) einer zeitlichen Ableitung der Schwingung berechnet.

16. Schwingungsregler nach einem der Ansprüche 12 bis 15, **dadurch gekennzeichnet, dass** eine Vorsteuerung (12) vorgesehen ist, die aus Sollwerten ($y_{set}$) und/oder aus zumindest einer zeitlichen Ableitung eines Sollwerts ( $\frac{d^n y_{set}}{dt^n}$ ) der Schwingungsgröße (y) eine Vorsteuer-Stellgöße ($u_V$) berechnet, die zur Ermittlung der Stellgröße (u) für den Aktuator (15) zu der vom Schwingungsregler (11) berechneten Stellgröße ($u_R$) addiert wird und/oder ein Schwingungsgrößenregler (14) vorgesehen ist, der die Abweichung zwischen einem Sollwert ($y_{set}$) der zu regelnden Schwingungsgröße (y) und einem Endwert ($y_{end}$) der Schwingungsgröße (y), als der nach dem Ausregeln der Schwingung erreichte Wert der Schwingungsgröße (y), ausregelt.

17. Schwingungsregler nach Anspruch 16, **dadurch gekennzeichnet, dass** ein Endwertbeobachter (20) vorgesehen ist, der einen Gleichanteil der Schwingung der zu regelnden Schwingungsgröße (y) als Endwert ($y_{end}$) berechnet.

## Claims

1. Method for compensating oscillations of at least one oscillation variable (y) to be controlled of an oscillatable technical system (1) with an oscillation controller (11) having a control law that calculates, from a target value ($y_{set}$) and an actual value ($y_{act}$) and/or a time derivative of a target value ($y_{set}$) and of an actual value ($y_{act}$) of the oscillation variable (y) to be controlled, a manipulated variable (u) for an actuator (15) of the oscillatable technical system (1), the calculated manipulated variable (u) via the oscillation controller (11) being passes to the actuator (15) for setting, **characterized in that** the control law for calculating the manipulated variable (u) takes account of a restriction ( $\frac{d^n u}{dt^n}_{min}$ , $\frac{d^n u}{dt^n}_{max}$ ) of at least one time derivative of the manipulated variable (u) calculated by the control law, such that the manipulated variable (u) calculated by the oscillation controller (11) is directly dependent on the at least one restriction of a time derivative of the manipulated variable (u).

2. The method of claim 1 , **characterized in that** the control law contains a controller parameter RP, which is dependent on the restriction ( $\frac{d^n u}{dt^n}_{min}$ , $\frac{d^n u}{dt^n}_{max}$ ) of the at least one time derivative of the manipulated variable (u).

3. The method of claim 2, **characterized in that** the control law contains a damping ($\xi_{set}$) to be introduced into the oscillatable technical system (1) as the controller parameter RP.

4. The method of claim 2 or 3, **characterized in that** the controller parameter RP is dependent on a system state.

5. The method of claim 4, **characterized in that** the controller parameter RP is dependent on an oscillation amplitude (A) of the oscillation and/or an amplitude ($A_n$) of a time derivative of the oscillation.

6. The method of claim 5, **characterized in that** an oscillation amplitude observer (17) is implemented, which, from time derivatives of the target values ( $\frac{dy_{set}}{dt}$ , $\frac{d^2 y_{set}}{dt^2}$ ) and the actual values ( $\frac{dy_{act}}{dt}$ , $\frac{d^2 y_{act}}{dt^2}$ ) and/or the actual values ($y_{act}$) and target values ($y_{set}$) of the oscillation variable (y) to be controlled, calculates the oscillation amplitude (A) of the oscillation and/or the amplitude ($A_n$) of a time derivative of the oscillation.

7. The method according to one of claims 1 to 6, **characterized in that** in the calculation of the manipulated variable (u) a dead time (Tt) of the oscillatable technical system (1) is taken into account.

8. The method of claim 7, **characterized in that** a control error (et) lying by the dead time (Tt) in the future is calculated and this future control error (et) is taken into account in the calculation of the manipulated variable (u).

9. The method according to one of claims 1 to 8, **characterized in that** a feedforward control (12) is implemented, which calculates from target values ($y_{set}$) and/or at least one time derivative of a target value ( $\frac{d^n y_{set}}{dt^n}$ ) of the oscillation variable (y) a feedforward control manipulated variable ($u_V$), which is added to determine the manipulated variable (u) for the actuator (15) with the manipulated variable ($u_R$) calculated by the oscillation controller (11).

10. The method according to one of claims 1 to 9, **characterized in that** an oscillation variable controller (14) is implemented, which compensates for the deviation between a target value ($y_{set}$) of the controlled oscillation variable (y) and a final value ($y_{end}$) of the oscillation variable (y), as the value of the oscillation variable (y) reached after the compensation for the oscillation.

11. The method of claim 10, **characterized in that** the final value ($y_{end}$) is calculated in a final value observer (20) which calculates a constant component of the oscillation of the oscillation variable (y) to be controlled as the final value ($y_{end}$).

12. An oscillation controller for compensating oscillations of at least one oscillation variable (y) of an oscillatable technical system (1) to be controlled, wherein in the oscillation controller (11) a control law is implemented, which calculates, from a target value ($y_{set}$) and an actual value ($y_{act}$) and/or a time derivative of a target value ($y_{set}$) and an actual value ($y_{act}$) of the oscillation variable (y) to be controlled, a manipulated variable (u) for an actuator (15) of the oscillatable technical system (1), **characterized in that** the control law for calculation of the manipulated variable (u) takes account of a restriction ( $\frac{d^n u}{dt^n}_{min}$ , $\frac{d^n u}{dt^n}_{max}$ ) of at least one time derivative of the manipulated variable (u) calculated by the control law and the oscillation controller (11) passes the calculated manipulated variable (u) to the actuator (15) for setting, such that the manipulated variable (u) calculated by the oscillation controller (11) is directly dependent on the at least one restriction of a time derivative of the manipulated variable (u).

13. The oscillation controller of claim 12, **characterized in that** the control law contains a controller parameter RP, which is dependent on the restriction ( $\frac{d^n u}{dt^n}_{min}$ , $\frac{d^n u}{dt^n}_{max}$ ) of the at least one time derivative of the manipulated variable (u).

14. The oscillation controller according to claim 13, **characterized in that** the controller parameter RP is dependent on an oscillation amplitude (A) of the oscillation and/or an amplitude ($A_n$) of a time derivative of the oscillation.

15. The oscillation controller of claim 14, **characterized in that** an oscillation amplitude observer (17) is provided, which from time derivatives ( $\frac{dy_{act}}{dt}$ , $\frac{d^2 y_{act}}{dt^2}$ ) of the actual values ($y_{act}$) and time derivatives ( $\frac{dy_{set}}{dt}$ , $\frac{d^2 y_{set}}{dt^2}$ ) of the target values ($y_{set}$) and/or actual values ($y_{act}$) and target values ($y_{set}$) of the oscillation variable (y) to be controlled calculates the oscillation amplitude (A) of the oscillation and/or the amplitude ($A_n$) of a time derivative of the oscillation.

**16.** The oscillation controller of one of claims 12 to 15, **characterized in that** a feedforward control (12) is provided which from target values ($y_{set}$) and/or at least one time derivation of a target value ($\dfrac{d^n y_{set}}{dt^n}$) of the oscillation variable (y) calculates a feedforward control manipulated variable ($u_V$) which is added to the manipulated variable ($u_R$) calculated by the oscillation controller (11) to determine the manipulated variable (u) for the actuator (15) and/or an oscillation variable controller (14) is provided which compensates for the deviation between a target value ($y_{set}$) of the oscillation variable (y) to be controlled and a final value ($y_{end}$) of the oscillation variable (y), as the value of the oscillation variable (y) reached after the oscillation has been compensated for.

**17.** The oscillation controller according to claim 16, **characterized in that** a final value observer (20) is provided, which calculates a constant component of the oscillation of the oscillation variable (y) to be controlled as the final value ($y_{end}$).

**Revendications**

**1.** Procédé permettant de réguler les oscillations d'au moins une grandeur d'oscillation (y) à réguler d'un système technique oscillant (1) à l'aide d'un régulateur d'oscillation (11) au moyen d'une loi de régulation qui, à partir d'une valeur de consigne ($y_{set}$) et d'une valeur réelle ($y_{act}$) et/ou d'une dérivée temporelle d'une valeur de consigne ($y_{Set}$) et d'une valeur réelle ($y_{act}$) de la grandeur d'oscillation (y) à réguler, calcule une grandeur de réglage (u) d'un actionneur (15) du système technique oscillant (1), la grandeur de réglage (u) calculée étant transmise par le régulateur d'oscillation (11) à l'actionneur (15) à des fins de réglage, **caractérisé en ce que** la loi de régulation servant au calcul de la grandeur de réglage (u) tient compte d'une limite ($\dfrac{d^n u}{dt^n}_{min}$, $\dfrac{d^n u}{dt^n}_{max}$) d'au moins une dérivée temporelle de la grandeur de réglage (u) calculée au moyen de la loi de régulation, de sorte que la grandeur de réglage (u) calculée par le régulateur d'oscillation (11) dépend directement de ladite au moins une limite d'une dérivée temporelle de la grandeur de réglage (u).

**2.** Procédé selon la revendication 1, **caractérisé en ce que** la loi de régulation contient un paramètre de régulateur RP qui dépend de la limite ($\dfrac{d^n u}{dt^n}_{min}$, $\dfrac{d^n u}{dt^n}_{max}$) de ladite au moins une dérivée temporelle de la grandeur de réglage (u).

**3.** Procédé selon la revendication 2, **caractérisé en ce que** la loi de régulation contient un amortissement ($\xi_{set}$) à introduire dans le système technique oscillant (1) en tant que paramètre de régulateur RP.

**4.** Procédé selon la revendication 2 ou 3, **caractérisé en ce que** le paramètre de régulateur RP dépend d'un état du système.

**5.** Procédé selon la revendication 4, **caractérisé en ce que** le paramètre de régulateur RP dépend d'une amplitude d'oscillation (A) de l'oscillation et/ou d'une amplitude ($A_n$) d'une dérivée temporelle de l'oscillation.

**6.** Procédé selon la revendication 5, **caractérisé en ce qu'**un observateur d'amplitude d'oscillation (17) est mis en œuvre, lequel calcule, à partir de dérivées temporelles des valeurs de consigne ($\dfrac{dy_{set}}{dt}$, $\dfrac{d^2 y_{set}}{dt^2}$) et des valeurs réelles ($\dfrac{dy_{act}}{dt}$, $\dfrac{d^2 y_{act}}{dt^2}$) et/ou des valeurs réelles ($y_{act}$) et de valeurs de consigne ($y_{Set}$) de la grandeur d'oscillation (y) à réguler, l'amplitude d'oscillation (A) de l'oscillation et/ou l'amplitude ($A_n$) d'une dérivée temporelle de l'oscillation.

**7.** Procédé selon l'une des revendications 1 à 6, **caractérisé en ce qu'**un temps mort (Tt) du système technique oscillant (1) est pris en compte lors du calcul de la grandeur de réglage (u).

**8.** Procédé selon la revendication 7, **caractérisé en ce qu'**une erreur de régulation (et) qui se situe dans le futur au voisinage du temps mort (Tt) est calculée et **en ce que** cette erreur de régulation future (et) est prise en compte lors du calcul de la grandeur de réglage (u).

9. Procédé selon l'une des revendications 1 à 8, **caractérisé en ce qu'**un système de précommande (12) est mis en œuvre, lequel calcule, à partir de valeurs de consigne ($y_{set}$) et/ou d'au moins une dérivée temporelle d'une valeur de consigne ( $\frac{d^n y_{set}}{dt^n}$ ) de la grandeur d'oscillation (y), une valeur de réglage de précommande (uv), qui est additionnée à la grandeur de réglage ($u_R$) calculée par le régulateur d'oscillation (11) pour déterminer la grandeur de réglage (u) de l'actionneur (15).

10. Procédé selon l'une des revendications 1 à 9, **caractérisé en ce qu'**un régulateur de grandeur d'oscillation (14) est mis en œuvre, lequel régule l'écart entre une valeur de consigne ($y_{set}$) de la grandeur d'oscillation (y) à réguler et une valeur finale ($y_{end}$) de la grandeur d'oscillation (y), en tant que valeur de la grandeur d'oscillation (y) obtenue après la régulation de l'oscillation.

11. Procédé selon la revendication 10, **caractérisé en ce que** la valeur finale ($y_{end}$) est calculée dans un observateur de valeur finale (20) qui calcule en tant que valeur finale ($y_{end}$) une composante continue de l'oscillation de la grandeur d'oscillation (y) à réguler.

12. Régulateur d'oscillation permettant de réguler les oscillations d'au moins une grandeur d'oscillation (y) d'un système technique oscillant (1), une loi de régulation étant mise en œuvre par le régulateur d'oscillation (11), laquelle calcule, à partir d'une valeur de consigne ($y_{set}$) et d'une valeur réelle ($y_{act}$) et/ou d'une dérivée temporelle d'une valeur de consigne ($y_{set}$) et d'une valeur réelle ($y_{Act}$) de la grandeur d'oscillation (y) à réguler, une grandeur de réglage (u) d'un actionneur (15) du système technique oscillant (1), **caractérisé en ce que** la loi de régulation permettant de calculer la grandeur de réglage (u) est une limite ( $\frac{d^n u}{dt^n}_{min}$, $\frac{d^n u}{dt^n}_{max}$ ) d'au moins une dérivée temporelle de la grandeur de réglage (u) calculée au moyen de la loi de régulation, et **en ce que** le régulateur d'oscillation (11) transmet la grandeur de réglage (u) calculée à l'actionneur (15) aux fins de la régulation, de sorte que la grandeur de réglage (u) calculée par le régulateur d'oscillation (11) dépend directement de ladite au moins une limite d'une dérivée temporelle de la grandeur de réglage (u).

13. Régulateur d'oscillation selon la revendication 12, **caractérisé en ce que** la loi de régulation contient un paramètre de régulateur RP qui dépend de la limite ( $\frac{d^n u}{dt^n}_{min}$, $\frac{d^n u}{dt^n}_{max}$ ) de ladite au moins une dérivée temporelle de la grandeur de réglage (u).

14. Régulateur d'oscillation selon la revendication 13, **caractérisé en ce que** le paramètre de régulateur RP dépend d'une amplitude d'oscillation (A) de l'oscillation et/ou d'une amplitude ($A_n$) d'une dérivée temporelle de l'oscillation.

15. Régulateur d'oscillation selon la revendication 14 , **caractérisé en ce qu'**il est prévu un observateur d'amplitude d'oscillation (17) qui calcule, à partir de dérivées temporelles ( $\frac{dy_{act}}{dt}$, $\frac{d^2 y_{act}}{dt^2}$ ) des valeurs réelles ($y_{act}$) et des dérivées temporelles ( $\frac{dy_{set}}{dt}$, $\frac{d^2 y_{set}}{dt^2}$ ) des valeurs de consigne ($y_{set}$) et/ou des valeurs réelles ($y_{act}$) et de valeurs de consigne ($y_{set}$) de la grandeur d'oscillation (y) à réguler, l'amplitude d'oscillation (A) de l'oscillation et/ou l'amplitude ($A_n$) d'une dérivée temporelle de l'oscillation.

16. Régulateur d'oscillation selon l'une des revendications 12 à 15, **caractérisé en ce qu'**il est prévu un système de précommande (12) qui calcule, à partir de valeurs de consigne ($y_{set}$) et/ou d'au moins une dérivée temporelle d'une valeur de consigne ( $\frac{d^n y_{set}}{dt^n}$ ) de la grandeur d'oscillation (y), une grandeur de réglage de précommande ($u_v$) qui est additionnée à la grandeur de réglage ($u_R$) calculée par le régulateur d'oscillation (11) pour déterminer la grandeur de réglage (u) de l'actionneur (15) et/ou **en ce qu'**il est prévu un régulateur de grandeur d'oscillation (14) qui régule l'écart entre une valeur de consigne ($y_{set}$) de la grandeur d'oscillation (y) à réguler et une valeur finale ($y_{end}$) de la grandeur d'oscillation (y), en tant que la valeur de grandeur d'oscillation (y) obtenue après la régulation de l'oscillation.

17. Régulateur d'oscillation selon la revendication 16, **caractérisé en ce qu'**il est prévu un observateur de valeur finale (20) qui calcule en tant que valeur finale ($y_{end}$) une composante continue de l'oscillation de la grandeur d'oscillation (y)

à réguler.

Fig. 1

Fig. 2a

Fig. 2b

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20070289931 A1
- EP 3109998 A1
- EP 3243772 A1
- EP 0578280 B1

**In der Beschreibung aufgeführte Nicht-Patentliteratur**

- **J.B. KLAASSENS et al.** Modeling and Control of Container Cranes. *Cargo Systems*, 2000, 11-12